# EUROPÄISCHE PATENTANMELDUNG

(11) **EP 1 720 228 A1**
(43) Veröffentlichungstag der Anmeldung: **08.11.2006**
(21) Anmeldenummer: 06008603.0
(22) Anmeldetag: 26.04.2006
(51) Int. Cl.: H02G 3/08

(54) **Spritzwassergeschütztes Gehäuse**

(30) Priorität: 04.05.2005 DE 102005020723
(71) Anmelder: WILO AG, 44263 Dortmund (DE)
(72) Erfinder: Godart, Jean-Michel, 41300 Salbris (FR)
(74) Vertreter: COHAUSZ DAWIDOWICZ HANNIG & SOZIEN

(57) **Zusammenfassung**

Gehäuse zur Aufnahme elektronischer oder elektrischer Bauteile, insbesondere Klemmenkasten für eine Pumpe, mit einem Unterteil und einem Deckel, wobei der Deckel und das Unterteil eine Randabdichtung aufweisen, mit mindestens einer umlaufenden Nut, in der ein umlaufendes Profil einliegt, wobei das Profil in der Nut zur Gehäuseinnenseite hin dichtend anliegt und zur Gehäuseaußenseite hin zwischen Profil und Nut ein Kanal zum Abfluss eintretender Flüssigkeit gebildet ist.

## Beschreibung

Die Erfindung betrifft ein Gehäuse zur Aufnahme elektronischer oder elektrischer Bauteile, insbesondere Klemmenkasten für eine Pumpe, mit einem Unterteil und einem Deckel, wobei der Deckel und das Unterteil eine Randabdichtung aufweisen, mit mindestens einer umlaufenden Nut, in der ein umlaufendes Profil einliegt.

Des weiteren betrifft die Erfindung ein Gehäuse zur Aufnahme elektronischer Bauteile, insbesondere Klemmenkasten für eine Pumpe, wobei das Gehäuse zumindest eine Öffnung für eine Kabeldurchführung aufweist.

Es sind Gehäuse der vorgenannten Art zur Aufnahme elektronischer Bauteile, insbesondere als Klemmenkasten für eine Pumpe bekannt. Zum Schutz der in dem Gehäuse angeordneten elektronischen Bauteile müssen derartige Gehäuse spritzwassergeschützt ausgeführt sein, d.h. es muss gewährleistet sein, dass ein Eintritt von Wasser in das Gehäuse unterbunden wird. Zur zuverlässigen Abdichtung des Gehäuses gegen Spritzwasser wird dabei üblicherweise eine O-Ring-Dichtung zwischen Unterteil und Deckel des Gehäuses angeordnet, d.h. dass ein zusätzliches Dichtungselement bei der Montage im Bereich der Randabdichtung eingebracht werden muss.

Nachteilig hierbei ist, dass ein zusätzliches Dichtungselement in Form der O-Ring-Dichtung bei der Montage eingebracht werden muss, die beim Aufsetzen des Deckels leicht verrutschen kann, so dass eine zuverlässige Abdichtung bei Montagefehlern nicht gewährleistet ist. Des weiteren sind derartige Klemmenkästen direkt an den Pumpengehäusen angeordnet, wobei es je nach Montagevorgabe vorkommt, dass die Position der Klemmenkästen relativ zur Pumpe auf 12 Uhr, 3 Uhr und 6 Uhr, oder 9 Uhr Position erfolgen muss. Je nach Positionierung des Klemmenkastens relativ zur Pumpe ist somit die Montage unter Einbringung der O-Ring-Dichtung in den Bereich der Randabdichtung zwischen Unterteil und Deckel kaum zu bewerkstelligen, d.h. dass auch hierdurch Montagefehler provoziert werden, die Undichtigkeiten zur Folge haben können.

Ebenfalls bekannt sind Gehäuse, bei denen im Kunststoffdeckel während des Spritzvorganges ein O-Ring integriert wird, d.h. dass auf ein zusätzliches zu montierendes Bauteil in Form eines O-Rings verzichtet werden kann. Nachteilig dabei sind jedoch die sehr hohen Kosten für die Fertigung sowie die hierfür benötigten Werkzeuge.

Des weiteren sind Gehäuse zur Aufnahme elektronischer Bauteile mit zumindest einer Öffnung für eine Kabeldurchführung bekannt. Diese Kabeldurchführungen werden an dem Gehäuse beispielsweise durch Überwurfmuttern festgelegt. Nachteilig hierbei ist, dass die Einbringung der Kabeldurchführung in die Öffnung im Gehäuse mehrere Arbeitsschritte umfasst und mehrere Teile zu montieren sind.

Aufgabe der Erfindung ist es, diese Nachteile zu überwinden und Gehäuse zur Aufnahme elektronischer Bauteile derart weiterzubilden, dass ein zuverlässiger Spritzwasserschutz unabhängig von der Positionierung des Gehäuses stets gewährleistet ist und wobei die Montage und Handhabbarkeit vereinfacht ist.

Weitere Aufgabe der Erfindung ist es, ein Gehäuse zur Aufnahme elektronischer Bauteile mit zumindest einer Öffnung für eine Kabeldurchführung derart weiterzubilden, dass die Montage der Kabeldurchführung in der Gehäuseöffnung vereinfacht wird.

Die Aufgabe wird erfindungsgemäß dadurch gelöst, dass bei einem gattungsgemäßen Gehäuse das Profil in der Nut zur Gehäuseinnenseite hin dichtend anliegt und zur Gehäuseaußenseite hin zwischen Profil und Nut ein Kanal zum Abfluss eintretender Flüssigkeit gebildet ist.

Das erfindungsgemäße Gehäuse kann ohne zusätzliche Materialien oder Bauteile gefertigt werden.

Dadurch, dass das Profil, insbesondere ein Wulst, in der Nut zur Gehäuseinnenseite hin dichtend anliegt, ist die Einbringung eines zusätzlichen Dichtungselementes, beispielsweise in Form einer O-Ring-Dichtung, im Bereich der Randabdichtung zwischen Unterteil und Deckel nicht mehr erforderlich. Hierdurch wird die Montage des erfindungsgemäßen Gehäuses deutlich vereinfacht, da lediglich noch der Deckel auf das Unterteil aufzustecken ist und eine zuverlässige Abdichtung automatisch erfolgt. Dadurch, dass zwischen Profil und Nut zur Gehäuseaußenseite hin ein Kanal zum Abfluss eintretender Flüssigkeit gebildet ist, kann diese Flüssigkeit bei Spritzwasserbeaufschlagung des Gehäuses unabhängig von der Positionierung des Gehäuses zur Außenseite hin abgeleitet werden, ohne dass Flüssigkeit in den Gehäuseinnenraum eindringen kann. Das erfindungsgemäße Gehäuse weist somit weniger zu montierende Teile auf, die Montage ist insgesamt vereinfacht und es erfolgt stets eine zuverlässige Abdichtung gegen Spritzwasser, unabhängig von der Positionierung des Gehäuses. Das erfindungsgemäße Gehäuse zur Aufnahme elektronischer oder elektrischer Bauteile ist somit sehr leicht handhabbar, weist eine einfache Konstruktion und einen einfachen Aufbau auf und ist gegenüber Gehäusen nach dem Stand der Technik in der Herstellung preiswerter, da auf zusätzliche Dichtungselemente verzichtet wird.

Weitere vorteilhafte Ausgestaltungen der Erfindung sind in den Unteransprüchen angegeben.

Vorzugsweise weist der Kanal Öffnungen nach außen zur Umgebung hin auf, insbesondere können bei einem im wesentlichen quaderförmigen Gehäuse entlang der Kantenlinien mehrere Öffnungen des Kanals zur Umgebung nach außen hin vorgesehen sein, so dass Flüssigkeit, die auf das Gehäuse gelangt, durch den Kanal zur Außenseite hin abgeleitet werden kann.

In einer bevorzugten Ausführungsform ist der Deckel formschlüssig und/oder kraftschlüssig an dem Unterteil befestigbar. Insbesondere kann das Profil, insbesondere ein Wulst in der Nut zur Gehäuseinnenseite hin klemmend anliegen. Alternativ oder kumulativ können auch Clip- oder Schnappverschlüsse vorgesehen sein.

Das Unterteil des Gehäuses kann aus einem oder mehreren Bodenteilen oder einem oder mehreren Seitenteilen gebildet sein. Bei der Bildung des Unterteils des Gehäuses aus Bodenteil/Bodenteilen und Seitenteil/Seitenteilen ist es somit möglich ein Baukastensystem zu schaffen, mittels dessen verschiedene Gehäusegeometrien je nach Anforderung durch die in dem Gehäuse unterzubringenden elektronischen Bauteile und/oder anzuordnenden Anschlüsse realisierbar sind.

Vorzugsweise weist der Deckel eine zum Unterteil hin vorspringende umlaufende Dichtlippe auf, die innen am Unterteil, insbesondere an einem Wulst am Unterteil dichtend zur Anlage kommt. Durch eine derartige am Deckel angeordnete Dichtlippe ist eine zuverlässige Abdichtung des Gehäuseinnenraumes gegen Spritzwasser gewährleistet.

Vorzugsweise ist das Unterteil des Gehäuses derart ausgestaltet, dass es an einem Pumpengehäuse befestigbar ist. Das Unterteil und/oder der Deckel des Gehäuses können aus Kunststoff bestehen. Hierdurch wird ein leichtes und preiswertes Gehäuse zur Aufnahme elektronischer Bauteile, welches insbesondere als Klemmenkasten einer Pumpe dienen kann, geschaffen.

Die weitere Aufgabe der Erfindung wird dadurch gelöst, dass bei einem Gehäuse zur Aufnahme elektronischer oder elektrischer Bauteile insbesondere Klemmenkasten für eine Pumpe, insbesondere mit den zuvor beschriebenen Merkmalen, derart weitergebildet ist, dass die Öffnung einen nicht kreisförmigen Querschnitt aufweist und durch diese Öffnung ein Einsatz mit einem entsprechenden Querschnitt durchsteckbar ist, wobei der Einsatz verdrehbar ist und der innere Rand der Öffnung durch einen Abschnitt des Einsatzes hintergreifbar ist.

Dadurch, dass der innere Rand der Öffnung durch einen Abschnitt des Einsatzes hintergreifbar ist, nach dem der Einsatz durch die Öffnung hindurchgesteckt wurde, wird die Montage der Kabeldurchführung in einer entsprechenden Gehäuseöffnung deutlich vereinfacht, da der Einsatz lediglich eingesteckt und verdreht werden muss. Dabei wird auf zusätzliche Bauteile verzichtet, so dass sich neben der leichteren Handhabbarkeit ein einfacherer Aufbau und eine elegante Lösung ergibt.

Vorzugsweise weist der Deckel des Gehäuses eine Ausnehmung auf, in der ein Abschnitt des Einsatzes, der den Rand der Öffnung hintergreift, einliegt. Dadurch dass ein Abschnitt des Einsatzes in einer Ausnehmung des Deckels einliegt, kann der Einsatz durch den Deckel gegen Verdrehen gesichert werden, nach dem er durch die Öffnung des Gehäuses hindurchgesteckt und verdreht wurde.

In einer bevorzugten Ausführungsform weisen Öffnung und Einsatz einen kreuzförmigen Querschnitt auf, wobei die Enden der Schenkel des Kreuzes abgerundet sein können. Die Enden der Schenkel des Kreuzes können jedoch auch andere beliebige geometrische Gestaltungen aufweisen. Insbesondere kann der kreuzförmige Querschnitt derart ausgestaltet sein, dass ein Schenkelende des Kreuzes eine andere Geometrie aufweist, als die übrigen Schenkelenden des Kreuzes, wobei der Deckel des Gehäuses eine hierzu korrespondierende Ausnehmung aufweist, so dass der Einsatz für die Kabeldurchführung nur in einer einzigen Position montierbar und festlegbar ist.

In einer bevorzugten Ausführungsform stehen die Schenkel des Kreuzes der Öffnung im Gehäuse unter einem Winkel von 45 Grad der Randabdichtung zwischen Unterteil und Deckel, d.h. dass der Einsatz für die Kabeldurchführung mit diagonal, d.h. X-förmig stehenden Schenkeln des Kreuzes durch die Öffnung durchsteckbar ist und nach einem Verdrehen die Schenkel des Kreuzes senkrecht, bzw. waagerecht, d.h. +-förmig stehen, so dass ein Schenkel des Kreuzes senkrecht zur Ebene der Randabdichtung steht und in dieser Position in einer Ausnehmung des Deckels einliegen kann, wodurch der Einsatz der Kabeldurchführung durch den Deckel in seiner Position fixiert wird.

Ausführungsbeispiele der Erfindung sind in den Zeichnungen beschrieben und werden im folgenden näher erläutert. Es zeigen:
- Figur 1: eine Ausführungsform des erfindungsgemäßen Gehäuses in einer perspektivischen Ansicht
- Figur 2: eine Ausschnittvergrößerung des Bereiches der Randabdichtung zwischen Deckel und Unterteil des Gehäuses nach Figur 1
- Figur 3: das Gehäuse nach Figur 1 in einer weiteren perspektivischen Ansicht
- Figur 4: verschiedene Positionierungen des erfindungsgemäßen Gehäuses als Klemmenkasten einer Pumpe
- Figur 5: verschiedene mögliche Positionierungen des Gehäuses
- Figur 6: eine perspektivische Ansicht eines Gehäuseunterteils mit einer Kabeldurchführung im Schnitt sowie eine Detailvergrößerung des Dichtungsbereiches der Kabeldurchführung
- Figur 7: eine perspektivische Ansicht einer Kabeldurchführung mit eingesetztem Kabeldurchführungseinsatz
- Figur 8: einen Einsatz für eine Kabeldurchführung in perspektivischer Ansicht
- Figur 9: den Einsatz nach Figur 8 in einer weiteren perspektivischen Ansicht
- Figur 10: eine Kabeldurchführung mit übergestülpter Manschette in perspektivischer Ansicht
- Figur 11: die Kabeldurchführung nach Figur 12 in einer weiteren perspektivischen Ansicht.

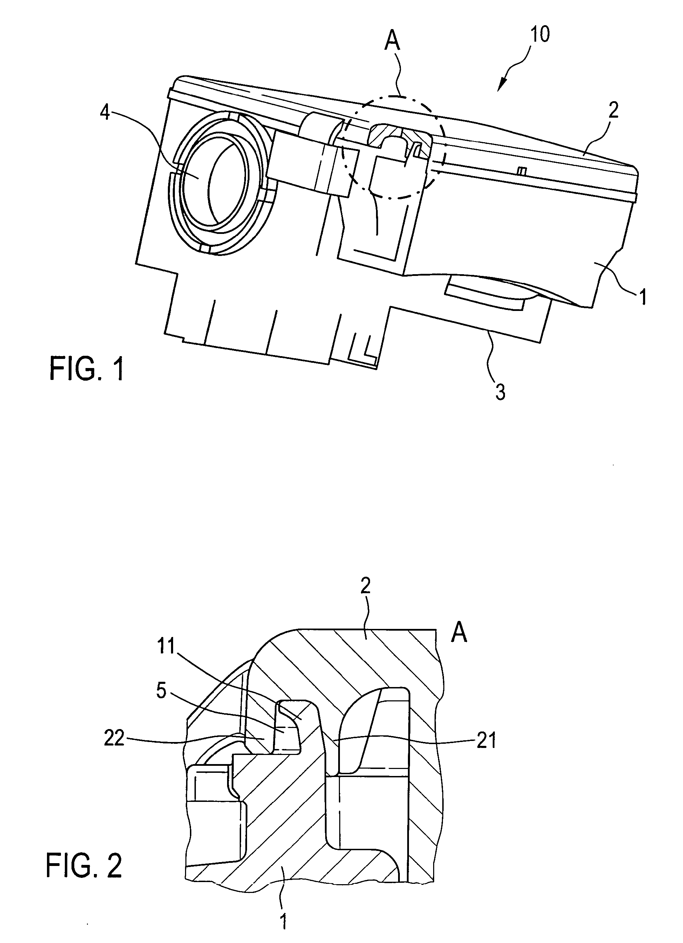

Figur 1 zeigt eine Ausführungsform des erfindungsgemäßen Gehäuses10 in einer perspektivischen Ansicht. Das Gehäuse 10 ist gebildet aus einem Unterteil 1 sowie einem Deckel 2. Die Unterseite 3 des Unterteils 1 ist derart ausgebildet, dass das Gehäuse 10 geeignet ist, als Klemmenkasten unmittelbar an dem Gehäuse einer Pumpe befestigt zu werden. Das Unterteil 1 des Gehäuses 10 weist eine Öffnung 4 in einer Seitenwand auf, die als Kabeldurchführung für elektrische Versorgungsleitungen dient. Die Ansicht des Gehäuses 10 nach Figur 1 ist teilweise geschnitten. Eine vergrößerte Darstellung des Details A nach Figur 1 ist dargestellt in Figur 2. Das Gehäuseunterteil 1 weist ein Profil in Form einer Wulst 11 auf, der in einer Nut des Deckels 2 einliegt. Der Deckel 2 weist eine Dichtlippe 21 auf, die an dem Wulst 11 des Unterteils 1 dichtend anliegt und somit zu einer Abdichtung zur Gehäuseinnenseite hin führt. Ein zur Außenseite hin angeordneter Vorsprung 22 am Deckel 2 übergreift den Wulst 11 des Unterteils 1, so dass zwischen Wulst 11 und Vorsprung 22 ein Kanal 5, d.h. ein freier Querschnitt gebildet wird, durch den Spritzwasser abgeführt werden kann.

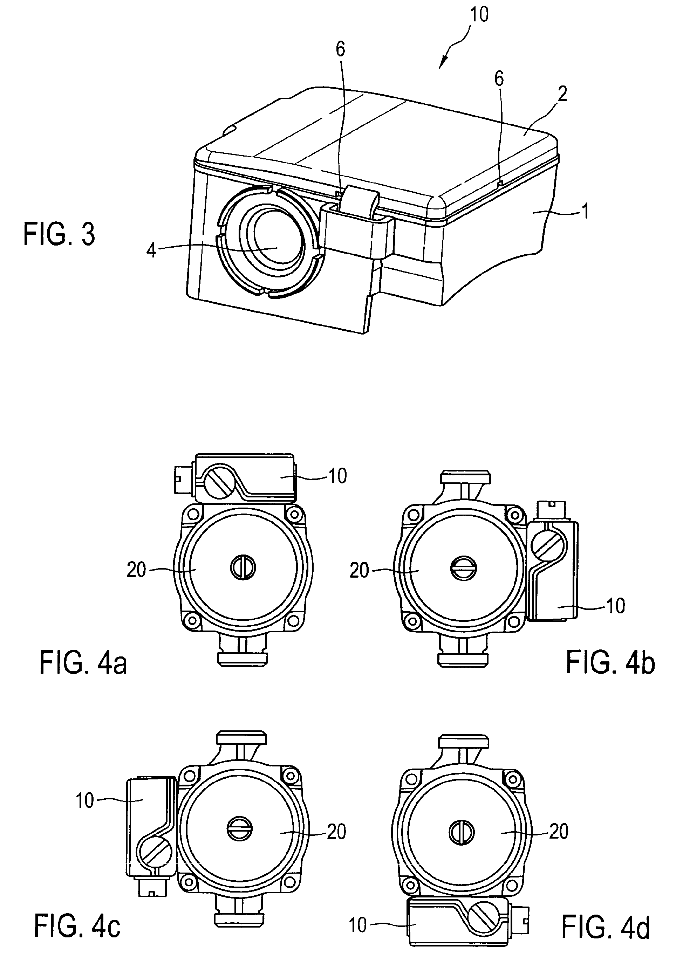

Figur 3 zeigt eine weitere perspektivische Ansicht des Gehäuses 10 nach Figur 1 mit dem Unterteil 1 und dem Deckel 2 sowie der Öffnung 4 im Unterteil 1 für eine Kabeldurchführung. Der Deckel 2 weist mehrere Öffnungen 6 zur Außenseite hin in dem Vorsprung 22 auf. Diese Öffnungen 6 dienen der Ableitung des in den Kanal 5 eintretenden Spritzwassers zur Umgebung hin.

In Figur 4 dargestellt sind verschiedene mögliche Positionierungen des Gehäuses 10 als Klemmenkasten einer Pumpe 20. Das Gehäuse 10 kann dabei relativ zur Pumpe 20 die Position auf 12 Uhr (Figur 4a) auf 3 Uhr (Figur 4b) auf 9 Uhr (Figur 4c) oder auf 6 Uhr (Figur 4 d) einnehmen.

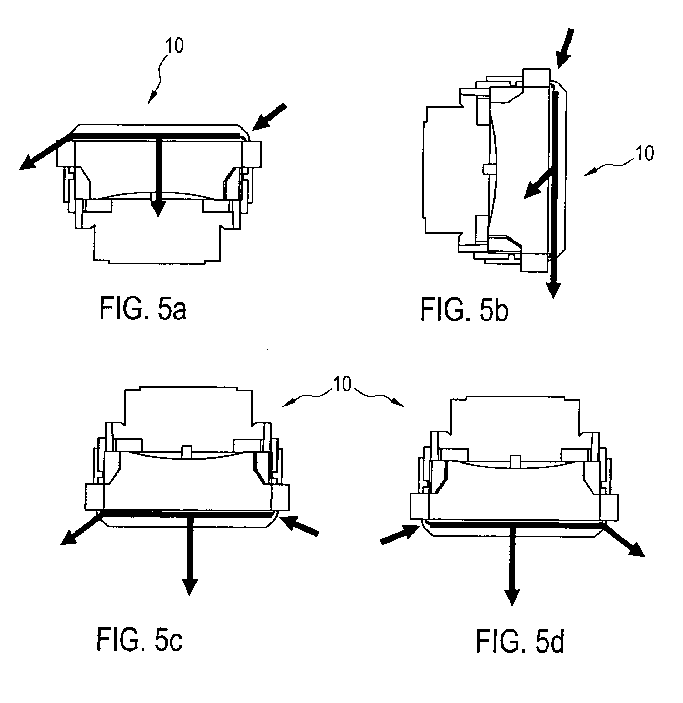

Entsprechend den verschiedenen möglichen Positionierungen des Gehäuses 10 zeigt Figur 5 für die Anordnung in 12 Uhr Position nach Figur 5 a für die Anordnung in 3 Uhr Position nach Figur 5 b, für die Anordnung in 6 Uhr Position nach Figuren 5 c und 5 d, die Ableitung von Spritzwasser entlang der eingetragenen Pfeile bei einer Beaufschlagung des Gehäuses 10 mit Feuchtigkeit. Aufgrund der mehreren vorgesehenen Öffnungen des in dem Bereich der Randabdichtung zwischen Deckel und Unterteil gebildeten Kanals ist eine Ableitung von Spritzwasser, welches das Gehäuse 10 beaufschlagt entlang der Pfeile stets gewährleistet, unabhängig von der Positionierung des Gehäuses 10.

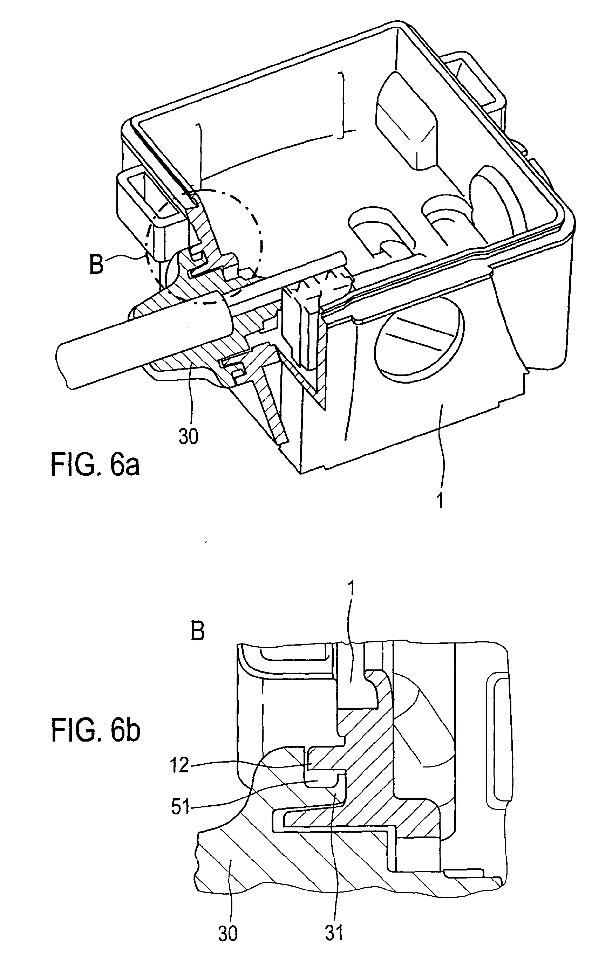

In Figur 6 dargestellt ist eine perspektivische Ansicht des Gehäuseunterteils 1 mit einem in die Öffnung 4 eingesetzten Einsatz mit Manschette 30 für eine Kabeldurchführung. Figur 6 b zeigt eine Detailvergrößerung des Kontaktbereiches zwischen Manschette 30 und Gehäuseunterteil 1. Die Manschette 30 weist eine umlaufende Lippe 31 auf, die dichtend an der Wand des Gehäuseunterteils 1 zur Anlage kommt. An dem Gehäuseunterteil 1 ist angeordnet ein um die Öffnung 4 umlaufenden konzentrischer Vorsprung 12, der die Dichtungslippe 31 der Manschette 30 übergreift, so dass zwischen der Manschette 30 des Einsatzes und dem Vorsprung 12 des Gehäuseunterteils 1 ein konzentrisch umlaufender Kanal 51 gebildet wird. Dieser Kanal 51 dient wiederum der Ableitung von Spritzwasser bei einer Feuchtigkeitsbeaufschlagung des Gehäuses im Bereich der Kabeldurchführung.

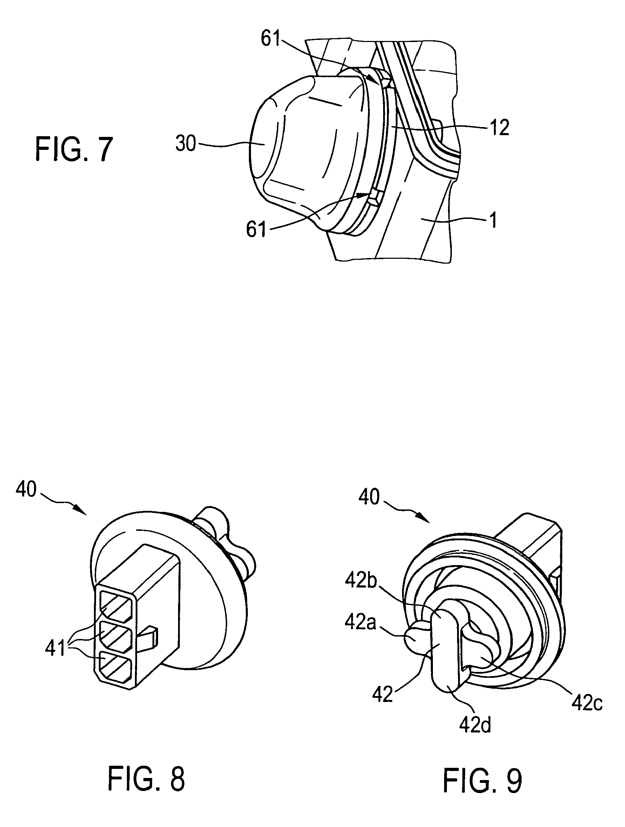

In Figur 7 dargestellt ist ein weiterer Detailausschnitt des Gehäuseunterteils 1 sowie mit einer übergestülpten Manschette 30 über der Öffnung für die Kabeldurchführung im Gehäuseunterteil 1.

In dem konzentrischen Vorsprung 12 sind Durchbrüche 61 angeordnet, durch die in dem Kanal 51, der zwischen Gehäuseunterteil 1 und Manschette 30 gebildet wird, befindliches Spritzwasser zur Außenseite hin abgeleitet werden kann. Dabei sind mehrere Durchbrüche 61 über dem Umfang angeordnet, so dass ein Abfließen von Wasser in jeder beliebigen Position des Gehäuses nach Figur 4 oder Figuren 5erfolgen kann.

Figur 8 zeigt eine perspektivische Ansicht eines Einsatzes für eine Kabeldurchführung. In Figur 9 dargestellt ist der Einsatz nach Figur 8 in einer weiteren perspektivischen Ansicht. Der Einsatz 40, der durch eine Öffnung für eine Kabeldurchführung in dem Gehäuse durchsteckbar ist, weist Kanäle 41 für insgesamt 3 Anschlusskabel auf. Auf der Seite, die durch das Gehäuse gesteckt wird, weist der Einsatz 40 einen kreuzförmigen Querschnitt 42 auf, wobei die Öffnung in dem Gehäuse einen dementsprechenden kreuzförmigen Querschnitt aufweist. Nach dem Durchstecken des Einsatzes 40 durch die kreuzförmige Öffnung in dem Gehäuse wird der Einsatz verdreht, so dass die Schenkel 42a, 42b, 42c, 42d, den inneren Rand der Öffnung in dem Gehäuse hintergreifen und somit den Einsatz 40 in seiner axialen Richtung fixieren.

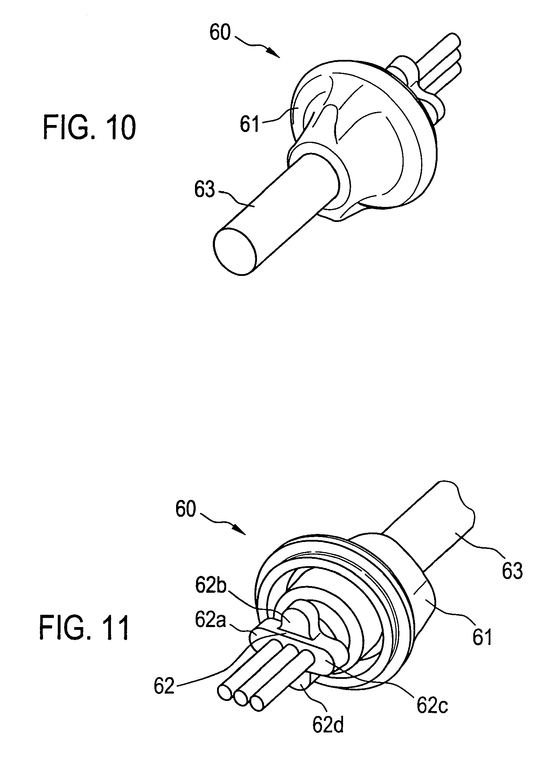

In den Figuren 10 und 11 dargestellt ist eine weitere Ausführungsform eines Einsatzes 60 für eine Kabeldurchführung durch eine entsprechende Öffnung in dem Gehäuse. Der Einsatz 60 wird wiederum mit dem an seinem zur Gehäuseinnenseite hin angeordneten kreuzförmigen Querschnitt 62 durch eine entsprechende korrespondierende kreuzförmige Öffnung des Gehäuses durchgesteckt und durch Verdrehen fixiert, in dem die Schenkel 62a, 62b, 62c, 62d des kreuzförmigen Querschnitts 62 des Einsatzes 60 den inneren Rand der Öffnung des Gehäuses hintergreifen. Auf der Außenseite angeordnet ist eine Manschette 61, die dichtend an dem Gehäuse zur Anlage kommt sowie den Kabelstrang 63 dichtend umschließt.

Die kreuzförmige Ausnehmung in der Öffnung des Gehäuses ist dergestalt orientiert, dass sie X-förmig angeordnet ist, d.h. dass die Schenkel des Kreuzes 42, 62 diagonal, d.h. unter einem 45 Grad Winkel zur Ebene der Randabdichtung mit dem Deckel stehen. Nach dem Durchstecken des Einsatzes 40, 60 durch die Gehäuseöffnung erfolgt eine Verdrehung des Einsatzes 40, 60 dergestalt, dass einer der Schenkel 42a, 42b, 42c, 42d, 62a, 62b, 62c, 62d senkrecht zur Ebene der Randabdichtung mit dem Deckel hin steht. Der auf das Gehäuseunterteil aufzusetzende Deckel weist eine entsprechende Ausnehmung auf, in der der zum Deckel hinweisende Schenkel des Kreuzes 42, 62 einliegt. Hierdurch erfolgt eine Fixierung des Einsatzes 40, 60 gegen Verdrehen und somit eine zusätzliche Sicherung.

## Patentansprüche

1. Gehäuse (10) zur Aufnahme elektronischer oder elektrischer Bauteile, insbesondere Klemmenkasten für eine Pumpe (20), mit einem Unterteil (1) und einem Deckel (2), wobei der Deckel (2) und das Unterteil (1) eine Randabdichtung aufweisen, mit mindestens einer umlaufenden Nut, in der ein umlaufendes Profil (11) einliegt, **dadurch gekennzeichnet, dass** das Profil (11) in der Nut zur Gehäuseinnenseite hin dichtend anliegt und zur Gehäuseaußenseite hin zwischen Profil (11) und Nut ein Kanal (5) zum Abfluss eintretender Flüssigkeit gebildet ist.

2. Gehäuse (10) nach Anspruch 1, **dadurch gekennzeichnet, dass** der Kanal (5) Öffnungen (6) nach außen zur Umgebung hin aufweist.

3. Gehäuse (10) nach Anspruch 1 oder 2, **dadurch gekennzeichnet, dass** der Deckel (2) formschlüssig und/oder kraftschlüssig an dem Unterteil (1) befestigbar ist.

4. Gehäuse (10) nach einem der vorherigen Ansprüche, **dadurch gekennzeichnet, dass** das Unterteil (1) aus einem oder mehreren Bodenteil/en und einem oder mehreren Seitenteil/en gebildet ist.

5. Gehäuse (10) nach einem der vorherigen Ansprüche, **dadurch gekennzeichnet, dass** der Deckel (2) eine zum Unterteil (1) hin vorspringende umlaufende Dichtlippe (21) aufweist, die innen am Unterteil (1), insbesondere an einem Profil (11) am Unterteil (1), dichtend zur Anlage kommt.

6. Gehäuse (10) nach einem der vorherigen Ansprüche, **dadurch gekennzeichnet, dass** das Unterteil (1) an einem Pumpengehäuse (20) befestigbar ist.

7. Gehäuse (10) nach einem der vorherigen Ansprüche, **dadurch gekennzeichnet, dass** das Unterteil (1) und/oder der Deckel (2) aus Kunststoff besteht.

8. Gehäuse (10) zur Aufnahme elektronischer oder elektrischer Bauteile, insbesondere Klemmenkasten für eine Pumpe (20), insbesondere nach einem der vorherigen Ansprüche, wobei das Gehäuse (10) zumindest eine Öffnung (4) für eine Kabeldurchführung aufweist, **dadurch gekennzeichnet, dass** die Öffnung (4) einen nicht kreisförmigen Querschnitt aufweist und durch diese Öffnung (4) ein Einsatz (40, 60) mit einem entsprechenden Querschnitt durchsteckbar ist, wobei der Einsatz (40, 60) verdrehbar ist und der innere Rand der Öffnung (4) durch einen Abschnitt des Einsatzes (40, 60) hintergreifbar ist.

9. Gehäuse (10) nach Anspruch 8, mit einem Unterteil (1) und einem Deckel (2), wobei der Deckel (2) und das Unterteil (1) eine Randabdichtung aufweisen, **dadurch gekennzeichnet, dass** der Deckel (2) eine Ausnehmung aufweist, in der ein Abschnitt (42a, 42b, 42c, 42d, 62a, 62b, 62c, 62d) des Einsatzes (40, 60), der den Rand der Öffnung (4) hintergreift, einliegt.

10. Gehäuse (10) nach Anspruch 8 oder 9, **dadurch gekennzeichnet, dass** die Öffnung (4) und der Einsatz (40, 60) einen kreuzförmigen Querschnitt (42, 62) aufweisen.

11. Gehäuse (10) nach Anspruch 10, **dadurch gekennzeichnet, dass** die Schenkel (42a, 42b, 42c, 42d, 62a, 62b, 62c, 62d) des Kreuzes (42, 62) der Öffnung (4) im Gehäuse (10) unter einem Winkel von 45° zur Ebene der Randabdichtung zwischen Unterteil (1) und Deckel (2) stehen.
